Europäisches Patentamt

European Patent Office

Office européen des brevets

(19)

(11) Numéro de publication: **0 000 296**

**B1**

(12) **FASCICULE DE BREVET EUROPEEN**

(21) Numéro de dépôt: **78400004.4**

(22) Date de dépôt: **01.06.78**

(51) Int. Cl.³: **B 60 K 17/34, B 60 K 1/02, B 60 K 5/08, F 16 H 37/08, B 66 F 9/06**

(54) **Dispositif de transmission pour véhicules notamment pour chariots élévateurs**

(30) Priorité: **29.06.77 FR 7719912**

(43) Date de publication de la demande:
**10.01.79 Bulletin 79/01**

(45) Mention de la délivrance du brevet:
**20.08.80 Bulletin 80/17**

(84) Etats contractants désignés:
**BE CH DE GB LU NL SE**

(56) Documents cités:
**AU - A - 413 900**
**DE - A - 1 580 064**
**DE - A - 2 503 762**
**FR - A - 1 488 285**
**GB - A - 608 592**
**GB - A - 994 443**
**US - A - 2 036 153**
**US - A - 2 317 623**
**US - A - 3 255 840**
**US - A - 3 804 190**

(73) Titulaire: **Itey-Bernard, Georges**
**11 Avenue Bergson**
**F-92380 Garches (FR)**
**Regie Nationale Des Usines Renault**
**Boite postale 103 8—10 avenue Emile Zola**
**F - 92109 Boulogne-Billancourt (FR)**

(72) Inventeur: **Itey-Bernard, Georges**
**11 Avenue Bergson**
**F - 92380 Garches (FR)**

(74) Mandataire: **Ernst-Schonberg, Michel**
**RNUR - S. 0804 B.P. 103**
**F - 92109 Boulogne-Billancourt (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Dispositif de transmission pour vehicules notamment pour chariots elevateurs

L'invention due à la collaboration de M. Georges ITEY-BERNARD concerne un dispositif de transmission de mouvement aux roues d'un véhicule tel qu'un chariot élévateur à essieux moteurs, qui comprend au moins un moteur générateur de la force motrice et un mécanisme réducteur de vitesse, commandant la rotation d'une roue motrice du véhicule.

Les dispositifs de transmission qui sur certains véhicules commandent individuellement chaque roue motrice peuvent être classés en deux types distincts : ceux qui comprennent un réducteur planétaire d'une part, et d'autre part, ceux qui comprennent un dispositif de réduction à courroies et poulies coniques.

La longueur généralement excessive de cas mécanismes est due à l'empilage dans le sens axial de leurs différents éléments, qui comprennent : le moteur, les freins normaux et de parcage ainsi qu'un train réducteur à plusieurs étages. Cet encombrement propre à la plupart des groupes classiques est particulièrement gênant lorsqu'ils sont montés sur des véhicules tels que des chariots élévateurs à fourche, dont la longueur tout et son rayon de giration, doivent être les plus petits possibles, pour leur assurer une manoeuvrabilité maximale.

Il est donc souhaitable qu'un mécanisme de commande d'une roue motrice de chariot élévateur ait non seulement une longévité supérieure à celle des mécanismes classiques, mais encore qu'il soit réalisé d'une manière telle, que l'ensemble des pignons réducteurs soit logé à proximité de la jante de la roue, que les freins, qui font partie intégrante du mécanisme, soient très accessibles, pour faciliter leur entretien et que, d'une manière générale, ce mécanisme soit relativement peu coûteux, et se caractérise par sa simplicité et la facilité avec laquelle on peut le démonter et le remonter.

On connaît par la publication DT OS 1 580 064 KESSLER une transmission de véhicule (tel qu'une grue) dont les organes de transmission sont disposés à la périphérie du châssis. Dans cette transmission deux moteurs entrainent des mécanismes réducteurs associés aux rues motrices du véhicule au moyen d'un mécanisme de renvoi. Le mécanisme de renvoi qui doit être associé à l'un ou l'autre moteur permet une répartition de la puissance motrice.

Une telle transmission convient aux véhicules dont les roues sont en contact avec des rails de guidage situés de part et d'autre d'une fosse pouvant recevoir la protubérance due à la présence du moteur d'entrainement, cette transmission convient également aux véhicules dont les roues sont en contact avec des rails de guidage et dont le chassis est constitué par des profilés métalliques assemblés qui délimitent un puits pouvant recevoir le moteur d'entrainment.

Un tel dispositif occupe en partie la partie centrale du véhicule et ne peut être adapté aux véhicules à roues orientables de conception simplifiée tels que des chariots élévateurs sur lesquels on ne souhaite ni l'emploi d'arbres de transmission ni l'emploi de joints de transr.. ssion articulés.

On connait également par le DE OS 2 503 762 GRUKO un engrenage planétaire simplifié avec deux éléments d'entrée qui peuvent être entrainés individuellement par deux moteurs.

On connait par le brevet U.S. 2.317.623 LEE un dispositif d'entrainement des roues d'un véhicule, utilisant deux moteurs respectivement associés à deux lignes d'arbres de transmission disposés à la périphérie du chassis du véhicule.

Un tel dispositif suppose le fonctionnement simultané synchrone des deux moteurs et ne convient pas aux véhicules dont on veut modifier la vitesse d'évolution par l'arrêt de l'un des moteurs.

L'invention a pour objet un dispositif de transmission simplifié à deux moteurs dont le couplage, ou le fonctionnement séparé, permet une évolution du véhicule dans la plage de vitesses souhaitée.

Selon l'invention un élément d'entraînement de l'une des roues, assure la transmission de la force motrice d'un élément d'entrée ou menant du mécanisme, à un élément de sortie ou mené de ce mécanisme, qui sont respectivement entraînés par un organe de transmission, tandis qu'un frein dudit élément d'entraînement assure le ralentissement de ladite roue.

Le dispositif de transmission ainsi réalisé permet la suppression des essieux moteurs conventionnels constitués d'arbres de roues associés à mécanisme différentiel.

Un tel dispositif de transmission est par conséquent particulièrement bein adapté pour entraîner les chariots élévateurs ou autres engins, dont le dispositif porte-charge peut occuper une position de rangement horizontale entre les essieux avant et arrière.

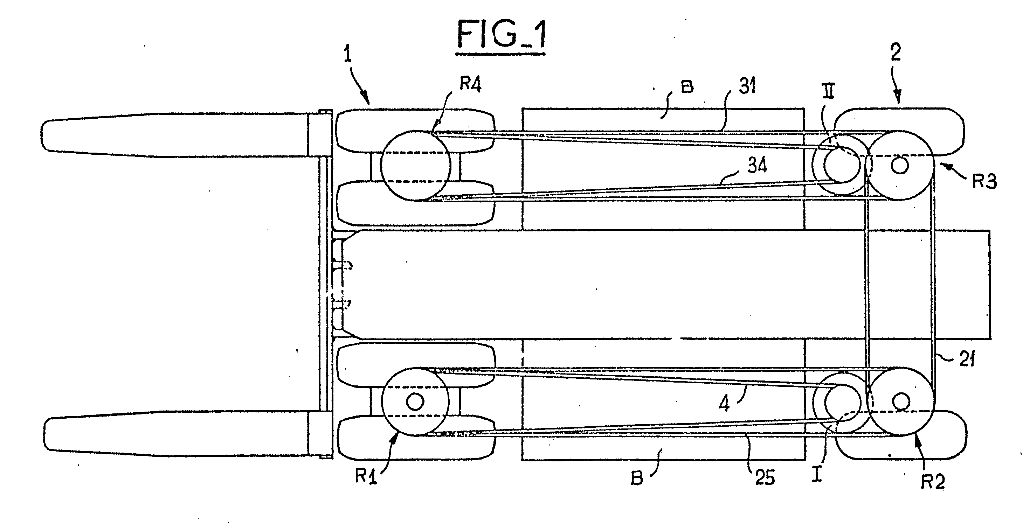

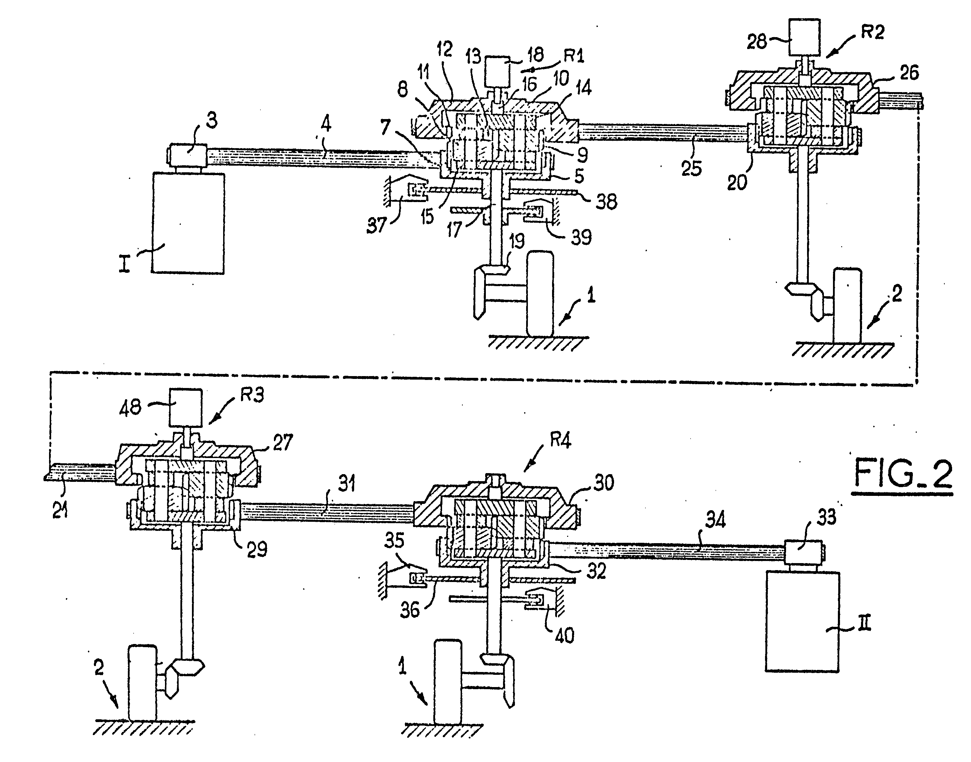

D'autres caractéristiques et avantages du dispositif ressortiront de la description d'un exemple de réalisation de celui-ci, faite en référence au dessin annexé, dans lequel la figure 1 est une vue en plan du châssis du véhicule sur lequel one été schématisés les organes du dispositif de transmission. La figure 2 est une vue développée en dispositif de transmission.

En référence aux figures 1 et 2, on voit que le véhicule est un chariot élévateur à fourche du type comportant quatre roues motrices faisant partie des essieux avant 1 et arrière 2.

Un moteur (qui peut être électrique) I, générateur de la force motrice, (il est à noter que ce moteur peut être tout aussi bien thermique ou hydraulique) est alimenté par une batterie B et est bridé sur le châssis du chariot. Il entraîne directement une poulie 3. Cette dernière reçoit un organe de transmission souple tel qu'une courroie menante 4, qui entraîne une poulie constituant l'élément d'entrée 5 d'un mécanisme réducteur de vitesse désigné dans son ensemble par la référence R1. Le réducteur R1 que nous allons décrire maintenant est associé à la roue avant gauche de l'essieu 1. De même des mécanismes réducteurs R2, R3, R4, de même structure que le mécanisme R1 sont respectivement associés aux autres roues du véhicule telles que les roues arrière gauche et droite de l'essieu arrière 2 et la roue avant droite de l'essieu avant 1. Les mécanismes réducteurs R2, R3, R4 n'ont donc pas à être décrits.

Le mécanisme R1 représenté plus en détail à la figure 2 comprend essentiellement un élément d'entrée 5, dont la partie externe est réalisée sous la forme d'une poulie, appelée par convention poulie manante, et dont la partie interne porte la denture d'une couronne planétaire 7 avec laquelle engrène un satellite 8. Un autre satellite 9, engrène avec le satellite 8, et avec l'élément de sortie 10, également constitué par une couronne planétaire 11 et par une poulie appelée par convention poulie menée 12. Les satellites 8 et 9 sont fixés au moyen d'axes à un porte-satellites 13. Ce dernier est constitué par deux flasques 14, 15 support d'axes des satellites 8, 9.

Des axes 16, 17, constituent les paliers porteurs des couronnes planétaires 11, 7 et sont rigidement reliés aux flasques 14, 15 tout en s'étendant axialement vers l'extérieur du mécanisme, dans le but de réaliser l'entraînement d'une pompe auxiliaire 18 et du pignon conique 19 d'entraînement de la roue avant gauche de l'essieu 1. La pompe 18, de petite cylindrée, alimente un circuit hydraulique des auxiliaires tels que la direction assistée et le circuit de commande des divers freins à disque; on monte de préférence la pompe 18 sur le mécanisme R1 car ce dernier est en liaison constante avec le moteur I dont la mise en tension est ininterrompue pendant les mouvements de manutention et d'évolution du chariot.

Les mécanismes réducteurs R2 et R3 entraînent de manière analogue. à celle du mécanisme R1, une pompe 28 et 48.

Il est évident que la poulie menante 5 transmet à la poulie menée 12 l'intégralité du couple et de l'effort tangentiel, du fait que les couronnes planétaires 7, 11 et les satellites correspondants 8, 9 sont identiques.

La cinématique du mécanisme met en évidence que le sens de rotation de la poulie 5 est inverse au sens de rotation de la poulie 12.

La vitesse de rotation du porte-satellites est proportionnelle à vitesse de rotation de la roue correspondante du véhicule.

Du fait de l'emploi de couronnes planétaires 7, 11 identiques et des satellites 8, 9 également identiques, la vitesse de rotation de la poulie 5 est égale à la vitesse de rotation de la poulie 12 lorsque le porte-satellites est arrêté.

La poulie menée 12 du mécanisme R1 est reliée mécaniquement à la poulie menante 20 du mécanisme R2 au moyen de l'organe de transmission représenté sous la forme d'une courroie 25.

De même la poulie menée 26 du mécanisme R2 est reliée mécaniquement à la poulie menante 27 du mécanisme R3 au moyen d'une courroie 21.

La poulie menée 29 du mécanisme R3 est reliée mécaniquement à la poulie menante 30 du mécanisme R4 au moyen d'une courroie 31.

Enfin la poulie menée 32 du mécanisme R4 est reliée mécaniquement à la poulie motrice 33 d'un moteur électrique II, alimenté par la batterie B, au moyen d'une courroie 34. Le moteur électrique II est également bridé sur le châssis du chariot.

On remarque que les mécanismes R1, R2, R3, R4 sont réunis entre eux au moyen de liaisons souples formées par les diverses courroies que dessinent un U.

Les liaisons représentées permettent de relier : la roue avant gauche à la roue arrière gauche par la courroie 25; la roue arrière gauche à la roue arrière droite par la courroie 21; la roue arrière droite à la roue avant droite par la courroie 31. L'intérêt d'une telle cinématique réside dans le fait que l'on évite toute liaison entre les roues avant du véhicule.

Le fonctionnement de la transmission est le suivant:

Si l'on choisit un sens de rotation positif pour le moteur I, la poulie 3, et pour la poulie menante 5, la poulie menée 12, et la poulie menante 20 due mécanisme R2 tournent dans un sens négatif. On en déduit que les sens de rotation des porte-satellites des mécanismes R1 et R2 sont inverses l'un et l'autre.

Les pignons coniques tels que 19, correctement disposés sur les axes 17 des porte-satellites, entraînent l'ensemble des roues du chariot dans le même sens.

### 1—Démarrage

L'ensemble des porte-satellites est immobile puisque les roues du chariot ne tournent pas.

La vitesse de rotation des poulies menantes est transmise aux poulies menées avec changement du sens de rotation des poulies. Le moteur II qui n'est pas alimenté va donc tourner à la vitesse du moteur I si les poulies 3 et 33 sont de même diamètre. L'inertie du moteur II engendre un couple de réaction sur l'ensemble des porte-satellites des quatre mécanismes R1, R2, R3, R4. Ce couple de réaction du moteur II sera généralement insuffisant pour démarrer le chariot. Toutefois, le demarrage du chariot sera obtenu par suite du blocage de la poulie menée 32 du mécanisme R4 sous l'action d'un frein à disque 35 dont l'effort de freinage s'applique sur un disque 36 solidaire de la poulie menée 32.

De manière analogue le démarrage peut être obtenu par le moteur II, le moteur I n'étant pas alimenté. Pour faciliter ce démarrage, la poulie menante 5 du mécanisme R1 peut être immobilisée par un frein à disque 37 dont l'effort de freinage s'applique sur un disque 38 solidaire de la poulie manante 5.

Le choix de la démultiplication qui lie le moteur II au mécanisme R4, ou le moteur I au mécanisme R1, et de la démultiplication obtenue par les engrenages à pignon conique 19, permet déjà l'entraînement du chariot sur sol plat à l'aide d'un seul moteur, jusqu'à ce que la vitesse obtenue soit égale à la moitié de la vitesse maximale. Selon un mode de réalisation préférentiel, l'ensemble des quatre mécanismes réducteurs R1, R2, R3, R4 liés en série, assurent un rapport de réduction 1:8 de la vitesse initiale du moteur d'entraînement en service, chacun des mécanismes permettant de réduire la vitesse d'entrée de moitié.

Un exemple numérique basé sur une vitesse de rotation de 3000 tr/min du moteur et une vitesse de rotation de 375 tr/min pour chaque porte-satellites, permet de montrer très simplement que le deuxième moteur reste immobile lorsque le chariot évolue à mi-vitesse sur sol plat.

2—Les moteurs I et II tournent à la même vitesse N avec des sens de rotation opposés.

Les poulies menantes 5 et 32 des mécanismes R1 et R4 tournent à la vitesse des moteurs, égale, selon l'example non limitatif, à 3000 tr/min. Si la vitese de rotation des porte-satellites est de 750 tr/min lorsque le chariot évolue à pleine vitesse en ligne droite, une démonstration simple met en évidence que la poulie menée 26 et la poulie menante 27 sont à vitesse nulle. Cette intéressante propriété de la transmission permet donc d'arrêter les pompes 28 et 48 montées sur les mécanismes réducteurs R2 et R3.

Si les pompes 28 et 48 assurent la commande d'élévation d'un plateau porte-charge lié au châssis du chariot, on voit qu'il est impossible de manoeuvrer le plateau porte-charge en ligne droite à pleine vitesse de translation. Le chariot procure donc une meilleure sécurité d'utilisation et permet une économie substantielle d'énergie en raison de l'arrêt automatique des pompes 28 et 48. Il est néanmoins admis que l'élévation du plateau porte-charge peut s'opérer jusqu'à ce que le chariot atteigne la moitié de sa vitesse maximale avec un seul moteur et que l'élévation rapide du plateau porte-charge peut s'opérer lorsque le chariot est à l'arrêt, les deux moteurs I, II tournant comme précédemment à la même vitesse et en sens contraire.

Il est évident qu'au moment d'opérer une élévation du plateau porte-charge il faudra préalablement immobiliser les roues du véhicule. A cette fin deux freins à disque 39, 40 respectivement associés aux axes 17 des mécanismes réducteurs R1 et R4 assurent l'immobilisation des roues avant du chariot.

Il sera toutefois possible de desserrer les freins 39, 40 au cours de l'élévation de la charge pour obtenir un avancement contrôlé du chariot souvent nécessaire durant les opérations de manutention.

3—Inversion du sens de marche

L'inversion du sens de marche s'effectue automatiquement en coupant l'alimentation du moteur I et en alimentant le moteur II, préalablement immobile, après inversion de son sens de rotation. Ce changement d'alimentation des moteurs peut s'effectuer même lorsque le chariot évolue en marche avant, et n'est pas préjudiciable à leur bon fontionnement. Le sens de transmission du couple à partir du moteur II, vers le moteur I, assure le démarrage en marche arrière après serrage du frein 37.

De la description qui vient d'être faite de la transmission et de son mode de fonctionnement, il ressort que celletci présente un certain nombre d'advantages particulièrement intéressants.

On réalise en effet, d'une manière économique, un chariot élévateur à quatre roues motrices avec des organes de transmission allégés et d'encombrement réduit.

L'emploi de deux moteurs de traction semblables mais montés de façon indépendante à chaque extrémité de la chaîne cinématique permet un ajustage de la puissance motrice à la puissance nécessaire à la commande du chariot.

Un tel montage permet le fonctionnement des moteurs à des vitesses différentes, au même couple.

Une telle utilisation de la transmission, par le choix des poulies et pignons, permet le libre choix des rapports de vitesses entre les moteurs et les mécanismes réducteurs, pour augmenter ou diminuer la durée d'evolution du chariot à la vitesse maximale ou à la vitesse réduite.

La transmission permet également d'obtenir de manière économique de nombreux rapports de transmission voisins les uns des autres sans modification appréciable de l'accélération du véhicule, tout comme le ferait un dispositif de régulation électonique des moteurs, sensiblement plus compliqué.

Sans sortir du cadre de l'invention il sera bien entendu possible de remplacer la liaison souple par courroies par une liaison hydrostatique ou par des chaînes de transmission, ou des arbres portant à leurs extrémités des pignons de renvoi d'angle.

Le dispositif illustré à titre d'exemple n'est pas limitatif, il pourra notamment utiliser des mécanismes réducteurs dont les satellites à engrenage sont remplacés par des galets de friction cylindriques mobiles entre des pistes coaxiales.

Il est à remarquer que les freins utilisés 39, 40 et 35, 37 seront de préférence des freins à disque car la transmission s'y prête par la présence des arbres verticaux 17 liant les mécanismes réducteurs aux pignons coniques 19.

L'arbre 17 a une vitesse suffisamment démultipliée pour permettre l'emploi de disques de petite dimension et de freins logeables à l'extérieur de la roue à freiner correspondante.

## Revendications

1. Dispositif de transmission de mouvement aux roues d'un véhicule à essieux moteurs au moyen de deux moteurs générateurs de la force motrice, dont l'un entraîne un mécanisme réducteur de vitesse associé à chaque roue motrice du véhicule, et dont l'autre entraîne également l'un desdits mécanismes réducteurs, lesdits moteurs et mécanismes réalisant conjointement une chaîne cinématique disposée à la périphérie du châssis du véhicule pour l'entraînement de l'ensemble des roues motrices de celui-ci, caractérisé par le fait qu'un élément d'entraînement (17) de l'une des roues, assure la transmission de la force motrice d'un élément de'entrée ou menant (5) du mécanisme, à un élément de sortie ou mené (12) de ce mécanisme, qui sont respectivement entraînés par un organe de transmission (4, 25), tandis qu'un frein (39 ou 40) dudit élément d'entraînement (17) assure le ralentissement de ladite roue.

2. Dispositif de transmission selon la revendication 1, caractérisé par le fait que les éléments menants (5, 20, 27, 30) et les éléments menés (12, 26, 29, 32) des mécanismes réducteurs (R1, R2, R3, R4) sont constitués par des poulies réunies entre elles et à deux moteurs électriques I, II au moyen d'organes de transmission (4, 25, 21, 31, 34).

3. Dispositif de transmission selon la revendication 2, caractérise par le fait que l'ensemble des éléments menants (5, 20, 27, 30) et l'ensemble des éléments menés (12, 26, 29, 32) des mécanismes réducteurs de vitesses (R1, R2, R3, R4) portent une couronne planétaire (7, 11) sur laquelle roulent des satellites (8, 9) mutuellement en contact.

4. Dispositif de transmission selon la revendication 3, caractérisé par le fait que dans un même mécanisme réducteur de vitesse (R1, R2, R3 ou R4) lès couronnes planétaires (7, 11) sont identiques entre elles et les satellites (8, 9) sont identiques entre eux.

5. Dispositif de transmission selon la revendication 3, caractérisé par le fait que la couronne planétaire (7, 11)'porte les pistes de roulement de galets de friction faisant office de satellites.

6. Dispositif de transmission selon l'une quelconque des revendications 2, 3 ou 5, caractérisé par le fait que l'élément menant (5, 20, 27 ou 30) et l'élément mené du mécanisme réducteur sont portés par les axes (17, 16) d'un porte-satellites (13).

7. Dispositif de transmission selon la revendication 6, caractérisé par le fait qu'un axe (17) du porte-satellites (13) du mécanisme réducteur de vitesse (R1, R2) porte le pignon d'entraînement (19) de la roue du véhicule et le disque de freinage d'un frein d'immobilisation (39, 40) de ladite roue.

8. Dispositif de transmission selon l'une quelconque des revendications 1 à 7, caractérisé par le fait que l'élément menant (5, 32) des mécanismes réducteurs (R1, R4) entraînés par des moteurs électriques (I, II) porte un frein d'immobilisation (37, 35).

9. Dispositif de transmission selon la revendication 6, caractérisé par le fait que l'un des axes (16) du porte-satellites (13) du mécanisme réducteur (R2, R3) porte une pompe hydraulique (28, 48) de commande d'élévation d'un plateau porte-charge du véhicule.

## Claims

1. Apparatus for transmitting movement to the wheels of a vehicle with drive axles by means of two motors for generating the drive force, one of which drives a speed reducing mechanism associated with each drive wheel of the vehicle and of which the other also drives one of said reducing mechanisms, said motors and mechanisms together forming a kinematic train disposed at the periphery of the chassis of the vehicle for driving the whole of the drive wheels thereof, characterised in that a drive element (17) of one of the wheels provides for transmission of the drive force from an input or driving element (5) of the mechanism to an output or driven element (12) of said mechanism, which are respectively driven by a transmission member (4, 25), while a brake (39 or 40) of said drive element (17) provides for deceleration of said wheel.

2. Apparatus according to claim 1 characterised in that the drive elements (5, 20, 27, 30) and the driven elements (12, 26, 29, 32) of the reducing mechanisms (R1, R2, R3 and R4) are formed by pulleys which are connected together and to two electric motors I, II by means of transmission members (4, 25, 21, 31, 34).

3. Apparatus according to claim 2 characterised in that the assembly of the drive elements (5, 20, 27, 30) and the assembly of the driven elements (12, 26, 29, 32) of the speed reducing mechanisms (R1, R2, R3 and R4) carry a planetary ring (7, 11) on which roll planet wheels (8, 9) in mutual contact.

4. Apparatus according to claim 3 characterised in that, in the same speed reducing mechanism (R1, R2, R3 or R4), the planetary rings (7, 11) are identical to each other and the planet wheels (8, 9) are identical to each other.

5. Apparatus according to claim 3 characterised in that the planetary ring (7, 11) carries the rolling tracks of anti-friction rollers acting as planet wheels.

6. Apparatus according to any one of claims 2, 3 and 5 characterised in that the drive element (5, 20, 27 or 30) and the driven element of the reducing mechanism are carried by the shafts (17, 16) of a planet wheel carrier (13).

7. Apparatus according to claim 6 characterised in that a shaft (17) of the planet wheel carrier (13) of the speed reducing mechanism (R1, R4) carries the drive pinion (19) of the wheel of the vehicle and the brake disc of a brake (39, 40) for locking said wheel.

8. Apparatus according to any one of claims 1 to 7 characterised in that the drive element (5, 32) of the reducing mechanisms (R1, R4) which are drive by electric motors (I, II) carries a locking brake (37, 35).

9. Apparatus according to claim 6 characterised in that one of the shafts (16) of the planet wheel carrier (13) of the reducing mechanism (R2, R3) carries a hydraulic pump (28, 48) for controlling raising of a load carrying platform of the vehicle.

**Patentansprüche**

1. Kraftübertragungseinrichtung zu den Rädern eines Fahrzeugs mit über zwei Antriebsmotoren angetriebenen Achsen, wobei ein Motor eine Untersetzungsanordnung antreibt, die mit jedem angetriebenen Rad des Fahrzeugs verbunden ist und der andere Motor ebenfalls eine der Untersetzungsanordnungen antreibt, und wobei die Motoren und die Untersetzungsanordnungen zusammen eine am Umfang des Fahrzeugrahmens angeordnete, kinematische Kette zum Antrieb sämtlicher angetriebener Räder bilden, dadurch gekennzeichnet, daß ein Antriebsteil (17) eines der Räder der Übertragung der Antriebskraft von einem Eingangsteil oder Führungsteil (5) der Untersetzungsanordnung zu einem Ausgangsteil oder geführten Teil (12) dieser Anordnung dient, welche entsprechend von einem Übertragungsteil (4, 25) angetrieben werden und daß eine Bremse (39, 40) am Antriebsteil (17) zum Abbremsen des entsprechenden Rades vorgesehen ist.

2. Kraftübertragungseinrichtung nach Anspruch 1, dadurch gekennzeichnet, daß die Führungsteile (5, 20, 27, 30) und die geführten Teile (12, 26, 29, 32) der Untersetzungsanordnungen (R1, R2, R3, R4) miteinander verbundene Riemenscheiben sind, die mit zwei Elektromotoren (I, II) über Übertragungsteile (4, 25, 21, 31, 34) verbunden sind.

3. Kraftübertragungseinrichtung nach Anspruch 2, dadurch gekennzeichnet, daß die Gesamtheit der Führungsteile (5, 20, 27, 30) und die Gesamtheit der geführten Teile (5, 26, 29, 32) der Untersetzungsanordnungen (R1, R2, R3, R4) mit einem Planetenzahnkranz (7, 11) verbunden sind, in den Planetenräder (8, 9), die ineinander eingreifen, sich abwälzen.

4. Kraftübertragungseinrichtung nach Anspruch 3, dadurch gekennzeichnet, daß in derselben Untersetzungsanordnung (R1, R2, R3 oder R4) die Planetenzahnkränze (7, 11) untereinander identisch sind und die Planetenräder (8, 9) untereinander identisch sind.

5. Kraftübertragungseinrichtung nach Anspruch 3, dadurch gekennzeichnet, daß der Planetenzahnkranz (7, 11) die Abrollbahnen der als Bremsrollen dienenden Planetenräder trägt.

5. Kraftübertragungseinrichtung nach Anspruch 3, dadurch gekennzeichnet, daß der Planetenzahnkranz (7, 11) die Abrollbahnen der als Bremsrollen dienenden Planetenräder trägt.

6. Kraftübertragungseinrichtung nach einem der Ansprüche 2, 3 oder 5, dadurch gekennzeichnet, daß das Führungsteil (5, 20, 27 oder 30) und das geführte Teil der Untersetzungsanordnung von den Achsen (17, 16) eines Planetenradträgers (13) getragen werden.

7. Kraftübertragungseinrichtung nach Anspruch 6, dadurch gekennzeichnet, daß eine Achse (17) des Planetenradträgers (13) der Untersetzungsanordnung (R1, R4) das Antriebskegelrad (19) für das Fahrzeugrad sowie die Bremsschiebe einer Festellbremse (39, 40) für dieses Rad trägt.

8. Kraftübertragungseinrichtung nach einem der Ansprüche 1 bis 7, dadurch gekennzeichnet, daß das Führungsteil (5, 32) der von den Elektromotoren (I, II) angetriebenen Untersetzungsanordnungen (R1, R4) eine Feststellbremse (37, 35) trägt.

9. Kraftübertragungseinrichtung nach Anspruch 6, dadurch gekennzeichnet daß eine der Achsen (16) des Planetenradträgers (13) der Untersetzungsanordnung (R2, R3) eine hydraulische Pumpe (28, 48) zur Steuerung des Hebevorgangs einer Hebebühne des Fahrzeugs trägt.

# FIG_1

0 000 296

FIG._2